# EUROPEAN PATENT APPLICATION

(11) **EP 0 898 892 A1**
(43) Date of publication of application: **03.03.1999**
(21) Application number: 97830424.4
(22) Date of filing: 18.08.1997
(51) Int. Cl.: A21D 13/00, A21D 2/36

(54) **Food dough for pizza**

(71) Applicant: Grieco, Leonardo, 21050 Saltrio (Varese) (IT)
(72) Inventor: Grieco, Leonardo, 21050 Saltrio (Varese) (IT)
(74) Representative: Bottero, Claudio

(57) **Abstract**

For the production of pizzas, in particular pre-cooked heat-only pizzas, a food dough is used which stands out by the fact of comprising a gel-forming compound that can absorb and keep moisture, preferably a starch-based compound obtainable from edible tubers, and that allows to heat the pizza dough, once it is completely cooked, without the happening of unwanted phenomena of hardening of the same.

## Description

The present invention relates to a food dough for pizza, in particular but not exclusively, for the production of pre-cooked heat-only pizzas.

In the following of the description and subsequent claims, by the expression: "pre-cooked heat-only pizza", it is intended to mean a bakery product suitable to be eaten some time after its preparation, and comprising an at least partly cooked dough on which a filling or topping is placed, which varies according to the type of pizza and which is blended during the heating before the pizza is eaten.

By the term: "filling or topping", there is intended to mean the tomato sauce and all those ingredients that are added on the dough and that characterise the taste of the various types of pizzas, for instance, cheeses, vegetables, fish, meat, salami, eggs, fruits, and so on.

The invention also relates to a process for the production of pre-cooked heat-only pizzas.

As is known, in the field of pre-cooked heat-only pizzas, the need is increasingly felt of realising a bakery product that is on the one side suitable to be eaten some time after its production, and that, on the other side, is entirely comparable to the pizza freshly prepared, for instance to the pizza that is usually eaten in pizza-restaurants, in particular as concerns the consistency, the taste and the flavour of the pizza at the time it is eaten.

### Prior art

In spite of the numberless efforts that have been made in the field to satisfy the aforesaid need, the different types of pre-cooked pizza that are found today on the market are not satisfying at all, as concerns the taste and flavour of the product once it is heated.

In fact, the pizzas according to the prior art, while reaching good levels of preservation and while using in some cases good quality ingredients, have always a severe drawback, which will be stressed hereafter, that causes such products to be usually considered by consumers as lower quality products compared to the pizza freshly prepared and eaten immediately.

The pizza dough, which is generally a mixture of flour, water and leaven, once the cooking is complete is unfit for being re-heated, because, due the low contents of moisture, this operation (even if of short duration: 1-2 minutes) would cause the dough to become extremely dry and crusty, difficult to be cut and chewed.

In order to avoid this drawback, at the time when the pizzas are produced according to the prior art, the dough of the pizza is not cooked completely, but only partly, for instance up to 40-70% The complete cooking of the dough is carried out afterwards, during the heating step of the pizza that precedes its eating.

If in so doing there is avoided on the one hand an unwanted hardening of the dough forming the base of the pizza, on the other hand, the completion of the cooking during the pizza heating step, which is usually carried out in home oven, substantially spoils the organoleptic quality of the filling placed on the base, to the detriment of the taste and flavour of the pizza.

In fact, the completion of the cooking of the base requires a rather long time, for instance comprised between 10 and 20 minutes, which is a much longer time than the time necessary to obtain the best blend of the filling ingredients, without spoiling the latter irreversibly.

As a consequence, the filling, being exposed for too long a time to the high temperatures of the oven, tends towards drying and burning, and at the same time the ingredients that make it up undergo a marked loss of taste and flavour.

Moreover, the excessive cooking of the filling causes a degradation of fats and proteins contained in the various ingredients, and therefore a substantial reduction in the nutritive values of the pizza.

This is why pre-cooked pizzas according to the prior art cannot stand up to a pizza freshly prepared, as the filling - which is of the essential to obtain a tasty and fragrant pizza - is irreversibly spoiled, independently on the quality of the ingredients, by the too long heating time necessary to complete the cooking of the base.

This problem is particularly felt in pre-cooked pizzas of the thin types, i.e. having a thickness in the central part of about half centimetre. In this type of pizza, the drawback of base hardening and therefore the necessity for the dough to be only partly pre-cooked at the time of the production is much more severe with respect to a high-type pizza, having for instance a thickness of one and a half centimetre to three centimetres.

It is worth noting that this problem is practically non existent for a pizza obtained in a pizza-restaurant oven for direct eating, since, thanks to the high temperature of the oven, the dough cooking time is very short (a few minutes) and such as to blend the filling without a substantial spoiling of the latter.

Because of the above-cited drawbacks, the producers of pre-cooked heat-only pizzas according to the prior art, could not produce till now a product of high quality from the point of view of taste and flavour, in the spite of the increasing requirements by consumers.

### Summary of the invention

The problem underlying the present invention is to make available a food dough for pizza allowing to obtain pre-cooked heat-only pizzas suitable to be eaten some time after their production and, at the same time, having all the organoleptic and nutritive properties of a pizza just prepared and taken out of the oven.

The above problem is solved, according to the invention, by a dough of the aforementioned type, comprising, in parts by weight based on the total weight of the same:
- 45 to 70 parts by weight of baking-flour;
- 13 to 40 parts by weight of water;
- 0.05 to 0.5 parts by weight of leaven;
- 3 to 34 parts by weight of at least a gel-forming compound that can absorb and keep the moisture.

In the following of the description and subsequent claims by the term: "gel-forming compound", it is intended to mean any food compound that can absorb and keep water even in high temperature conditions, such as for instance starch.

Advantageously, thanks to the characteristic combination of the above described ingredients, and in particular the presence of a gel-forming compound, the dough according to the present invention can be completely cooked at the time of production of the pizza, without this involving an unwanted hardening of the same during the heating step that precedes eating.

As a consequence, the present invention allows to utilise the heating step only to blend in the best ways the filling, without spoiling it, and to obtain therefore a product that stands perfectly up to a pizza just prepared and taken out of the oven, in particular from the point of view of consistency, taste and flavour.

Thanks to this invention, the aforementioned drawbacks of the prior art are therefore avoided in a simple, effective and economical manner.

### Detailed description

The food dough for pizza subject matter of this invention comprises advantageously low cost ingredients that are easily found on the market.

A first ingredient is a baking-flour of the type generally used for pizza dough. For instance whole corn meal or wheat flour 00, and mixtures thereof.

Advantageously, the flour is contained in the dough in an amount comprised between 45 and 70 parts by weight, preferably between 47 and 67 parts by weight based on the total weight of the dough.

Besides flour, the dough comprises in parts by weigh based on the total weight of the same, water in a quantity advantageously comprised between 13 and 40 parts by weight (preferably between 16 and 34 parts by weight), and leaven in a quantity advantageously comprised between 0.05 and 0.5 parts by weight.

As will be seen later on, outside the indicated concentration ranges, the pizza dough is difficult to work, in particular as concerns dough rolling out operation, or the dough tends to harden during pizza heating.

Preferably, the leaven used is brewer's yeast. However, other types of leavens are not excluded, such as for instance bread-leaven.

The ingredients listed till now are the traditional ones of pizza dough according to the prior art.

Advantageously, according to the present invention, the dough further comprises at least a gel-forming compound that can absorb and keep moisture.

Preferably, such gel-forming compound comprises at least a starch-based compound which, according to a preferred embodiment of the present invention, can be obtained from edible tubers.

In the following of the description and subsequent claims, by the term: "starch-based compound", it is intended to mean a starch-comprising food product, comprised for instance between 5% and 80% by weight based on the total weight of the dough.

Examples of edible tubers particularly suitable to be utilised to obtain the starch-based compound according to the invention are preferably chosen among the group comprising potatoes, manioc, and mixtures thereof.

Particularly satisfying results have been obtained through the utilisation in the dough of mashed potatoes as starch-based compound.

In the following of the description and the subsequent claim, by the term: "mashed potatoes", it is intended to mean mashed pulp of cooked potatoes.

Alternatively, the starch-based compound advantageously comprises a food fecula, preferably potato flour. However, the utilisation of other types of food fecula, such as for instance tapioca, is not excluded. The invention also allows the utilisation of mixtures of food fecula, preferably chosen among those indicated hereinabove.

The concentration of the gel-forming compound is comprised between 3 and 34 parts by weight based on the total weight of the dough.

When the gel-forming compound comprises a mixture based on starch obtained from edible tubers, particularly satisfactory results have been observed, with a concentration of the starch-based compound comprised between 11 and 28 parts by weight based on the total weight of the dough.

In this case, it has been actually observed that, with amounts lower than 11 parts by weight, the compound tends towards hardening too much during the pizza heating step, so that, to prevent such drawback, it is necessary to cook only partly the dough at the time of preparation of the pre-cooked pizza, with all of the ensuing drawbacks that have been described hereinabove with reference to the prior art.

On the contrary, with quantities higher that 28 parts by weight, it has been observed that the starch-based compound causes the dough to be crumbly and little elastic, preventing in this way an optimum mixing of the various ingredients as well as a homogeneous and thin rolling out of the dough.

By the term: "thin rolling out of the dough", it is intended to mean a rolling out that allows to obtain a pizza of the thin type, i.e. a pizza having a thickness in correspondence of its central part variable between 0.2 and 0.8 cm, usually not greater than 1 cm.

According to a preferred embodiment of the invention, the dough advantageously comprises a starch-based compound obtained from edible tubers in a quantity comprised between 15 and 19 parts by weight based on the total weight of the dough.

The applicant has recognised that the just described ingredients allow to obtain, in the amounts indicated, a pizza dough that can be advantageously completely cooked during the production of the pizza, without for this becoming hard and dry during the heating step before eating, allowing at the same time to adjust as wished the time necessary to blend the filling without spoiling it, to the advantage of the pizza consistency, taste and flavour.

The presence of a gel-forming compound, in particular a compound chosen among the group of edible tubers, is such as to promote moisture keeping in the inside of the dough, with the ensuing result that the dough, once it is cooked, still has a moisture contents sufficient to allow its heating without unwanted hardening effects.

Preferably, the gel-forming compound comprises mashed potatoes, as it has been found that the granular consistency typical of puree further helps moisture keeping by the dough. Moreover, potatoes advantageously lend pizza dough a certain level of friability that improves its consistency, in particular in correspondence of the pizza edges that usually remains drier.

Thanks to the present invention, it is now possible to heat the pizza only to meet the requirements of the filling, and not to complete the cooking of the dough. It is clear that, in this way, it is advantageously possible to preserve at best the taste and flavour of the ingredients that make up the filling, obtaining a pizza that, once it is heated, is entirely similar, from the point of view of the organoleptic and nutritive qualities, to the pizza freshly prepared which is eaten in pizza-restaurants.

With regard to this point, it is important to stress that the present invention advantageously allow to solve the technical problem mentioned hereinabove in a very simple and economical way, with no need to having recourse to any type of chemical agent nor to complex and expensive dough treatment processes or special heating processes of the pre-cooked pizza, and obtaining in this way a perfectly natural and healthy product, suitable to be mass-produced and easily heatable in any domestic oven.

According to an alternative embodiment of the present invention, the food dough for pizza further comprises sodium bicarbonate.

Actually, is has been advantageously found that sodium bicarbonate added to the pizza dough forms during cooking a plurality of micro-bubbles which render the dough base softer, improving its consistency. Besides, the permanence of these bubbles in the inside of the dough, makes moisture keeping easier, helping to avoid a hardening of the dough at the time when the pizza is heated.

A further advantage ensuing from the presence of sodium bicarbonate in the dough comes from the fact that it promotes the preservation of the pre-cooked pizza.

Particularly satisfactory results are obtained by using an amount of sodium bicarbonate advantageously comprised between 0.05 and 0.4 parts by weight based on the total weight of the dough.

In place of sodium bicarbonate, ammonium carbonate may be used.

According to a further embodiment of the present invention, the food dough for pizza further comprises a vegetable oil, preferably chosen among the group comprising seed oil, olive oil, peanut oil, maize oil, and mixtures thereof.

Also in this case, there has surprisingly been observed an improvement in the consistency of the heated dough after the cooking. It may be assumed that oil forms on the surface of the dough a thin film that can help to keep moisture in the inside of the dough, preventing therefore the dough from becoming too hard during the pizza heating.

Besides, oil presence causes the dough to be more elastic and easier workable, allowing in this way a homogeneous and thin rolling out of the same.

Particularly satisfying results have been obtained with a pizza dough comprising, in parts by weigh based on the total weigh of the same, 0.5 to 4 parts by weight of vegetable oil, preferably 1.5 to 2.5 parts by weight.

According to the type of pizza one wants to obtain, the dough according to the invention may further comprise salt to an amount known to those skilled in the art, and in any case negligible with respect to the other ingredients.

From the above description, it clearly appears that the food dough subject matter of this invention can be advantageously used both for the production of pizzas to be eaten on the spot and, in particular for the production of pre-cooked heat-only pizzas.

Advantageously, the pre-cooked heat-only pizza obtainable by rolling out and cooking of the dough described hereinabove, substantially differs from pre-cooked pizzas of the prior art in that the dough can be completely cooked during the pizza production step, without becoming too hard at the time it is heated before being eaten, allowing in this way to adjust the duration of such heating only for the purposes of the filling, to the advantage of the pizza consistency, taste and flavour.

Moreover, the pre-cooked heat-only pizza according to the invention is suitable for being preserved also for a long time (several months) before being eaten, for instance by freezing it.

When eating is required, it suffices to heat the pre-cooked pizza in a common domestic oven, at a temperature of about 240-260°C for about five minutes at the most (according to the filling, the heating duration may vary between 3 and 5 minutes), so as to obtain a product of excellent quality, whose consistency, taste and flavour are comparable to those of freshly prepared pizzas.

According to a further aspect of the invention, a process is also provided for the production of a pre-cooked heat-only pizza, comprising the steps of:
- mixing 45 to 70 parts by weight of a baking-flour with 13 to 40 parts by weight of water, 0.05 to 0.5 parts by weight of leaven, and 3 to 34 parts by weight of at least a gel-forming compound that can absorb and keep moisture, obtaining a homogeneous and partly elastic dough;
- rolling out said dough, obtaining a base for pizza;
- cooking completely the so obtained base;
- arranging a filling on the cooked base;
- packing the cooked and filled base, obtaining a pre-cooked heat-only pizza.

The mixing order of the various ingredient is not critical. Preferably, water is first mixed with leaven, then the gel-forming compound is added, and lastly flour. In this way, a homogeneous distribution of the dough ingredients is obtained.

Advantageously, the complete cooking of the base is made in a firewood-oven at a temperature of about 300-380 °C for a time of about 1-3 minutes. Firewood-oven cooking is preferred as it lends the base for pizza a particular taste and consistency, which are greatly appreciated by consumers.

Alternatively, the base can be cooked in an electric oven.

Ovens of this type are widely used in pizza-restaurants and well known to those skilled in the art.

The filling arranged on the cooked base may be of any type, according to the type of pizza one wishes to obtain. There are practically no limits in the pizza variants that can be obtained thanks to this process.

The packing of the pre-cooked pizza comprising the base and the filling, is carried out according to the principles common to this type of operation, for instance the pizza is vacuum-packaged in food-containers.

Preferably, the process according to the invention further comprises the step of cooling at room temperature the completely cooked base for pizza before arranging on it the filling.

In this way, the filling arranged on the base remains unaltered and fresh until the time arrives of heating the pizza. Otherwise, the high temperature of the base just taken out of the oven may cause a beginning of cooking of the filling, that can bring about a taste and flavour loss of the heated pizza.

In a particular and advantageous embodiment of the present invention, the process further comprises the step of arranging a given quantity of tomato sauce on the base for pizza before cooking the latter.

In this way a double aim is achieved, on one hand of removing the excess of water comprised in the tomato sauce, so as to prevent the latter, by wetting the base for pizza during the preservation, from spoiling the consistency of the same, and by unwantedly watering down the other ingredients of the filling, from worsening their taste, and on the other hand of preventing the base for pizza from uncontrollably leavening during the cooking, forming even a ball.

In order to prevent this last drawback, the processes of the prior art generally include the puncturing of the base before cooking. However, this solution is unsuitable for pre-cooked pizzas, as during the preservation or the heating stages of the pizza, a part of the filling, in particular the tomato sauce, may escape from the pizza bottom, causing several problems to the consumer and markedly worsening the quality of the product.

A further advantage ensuing from the tomato sauce addition step before the cooking of the base, lies in that the tomato sauce is sterilised during cooking, and in this way it does not gets a acid taste during pizza preservation. In this way, the tomato sauce can be preserved for a long time without its becoming spoiled and with no need for the addition of chemical preserving or stabilising agents.

Advantageously, the gel-forming compound utilised to prepare the dough comprises at least a starch-based compound, preferably obtained from edible tubers, chosen for instance among the group comprising potatoes, manioc, and mixtures thereof.

Alternatively, as a starch-based compound, food fecula may be used, preferably potato flour or mashed potatoes. In the latter case, potatoes are cooked, peeled and mashed until a puree of potatoes pulp is obtained, which is then mixed with the other ingredients of the dough.

According to a further embodiment of the process of the invention, there are mixed, together with the baking-flour, the water, the leaven and the gel-forming compound, also 0.05 to 0.5 parts by weight of sodium bicarbonate and/or 0.5 to 4 parts by weight of a vegetable oil.

Obviously, as concerns particular doses of the various ingredients that are utilised during the mixing step of the process according to the invention, reference is made to what has been described hereinabove.

### EXAMPLE

A group of five people chosen among average pizza consumers, of both the pre-cooked type and the freshly prepared type, were submitted to a blind test aiming at evaluating the organoleptic properties of the pre-cooked pizza according to the invention, comparing it with the pre-cooked pizzas commonly marketed, and with the pizza freshly prepared.

A person eating about a pizza per week was considered to be an average pizza consumer.

The following parameters have been taken into consideration for the evaluation: consistency of the dough, general taste and fragrance of the pizza, on a 1 to 5 scale (1=very bad, 2=poor, 3=fair, 4=good, 5=very good).

The test included the tasting of fifteen pizzas indicated hereafter by the references 1 to 15, of which no. 1 is of the type freshly prepared, nos. 2-6 are of the pre-cooked type according to the invention, and nos. 7-15 of the pre-cooked type according to the known art.

All the pizza were of the "margherita" type, i.e. with a filling comprising only tomato sauce an mozzarella cheese. The dough for pizzas nos. 1, 7-15 substantially comprises wheat flour 00, water and brewer's yeast.

The dough for pizza no. 2 comprises in parts by weight based on the total weight of the same: 58.1 parts by weight of wheat flour 00, 24 parts by weight of water, 0.3 parts by weight of brewer's yeast, and 17.6 parts by weight of mashed potatoes.

The dough for pizza no. 3 comprises in parts by weight based on the total weight of the same: 57 parts by weight of wheat flour 00, 20 parts by weight of water, 0.3 parts by weight of brewer's yeast, and 22.7 parts by weight of mashed potatoes.

The dough for pizza no. 4 comprises in parts by weight based on the total weight of the same: 58.6 parts by weight of wheat flour 00, 29.1 parts by weight of water, 0.3 parts by weight of brewer's yeast, and 12 parts by weight of mashed potatoes.

The dough for pizza no. 5 comprises in parts by weight based on the total weight of the same: 58 parts by weight of wheat flour 00, 24.9 parts by weight of water, 0.3 parts by weight of brewer's yeast, 16.5 parts by weight of mashed potatoes, and 0.3 parts by weight of carbon dioxide.

The dough for pizza no. 6 comprises in parts by weight based on the total weight of the same: 57.7 parts by weight of wheat flour 00, 23 parts by weight of water, 0.3 parts by weight of brewer's yeast, 17 parts by weight of mashed potatoes, and 2 parts by weight of seed oil.

Not to distort the results of the test, a check was performed to make sure that all the ingredients utilised for the pizza were of the same quality. Pizzas nos. 1-3, 6 and 15 were cooked in a firewood-oven, while pizzas nos. 4, 7-14 were cooked in an electric oven.

Pre-cooked pizzas nos. 2-6 have been advantageously heated in an electric oven at a temperature of 250°C for about 4 minutes. Pizzas nos. 7-15 have been heated in the same oven, but for a period of time comprised between 7 to 13 minutes, according to the indications of the producer.

People submitted to the test were given a tasting of a same size and taken from the central part of each pizza. The tasting was conveniently served at a temperature of about 35°C.

The results of the tests (mean values) are shown hereafter, with some comments by tasters.

| **Pizza no.** | **Consistency** | **Taste** | **Fragrance** | **Comments** |
|---|---|---|---|---|
| 1 | 4 | 3.8 | 4 | soft dough |
| 2 | 4 | 4.2 | 4.2 | soft dough |
| 3 | 3.8 | 4 | 3.8 | soft dough |
| 4 | 3.4 | 3.8 | 4.2 | slightly hard dough |
| 5 | 4.6 | 4.2 | 4 | very soft dough |
| 6 | 5 | 4.6 | 4.6 | soft dough, slightly crusty edges |
| 7 | 3.4 | 2.6 | 3 | slightly rubbery dough, dry filling |
| 8 | 3.8 | 3 | 2.8 | slightly dry filling |
| 9 | 3 | 3 | 3 | slightly dry dough |
| 10 | 2 | 2.4 | 2.4 | rubbery dough |
| 11 | 4 | 2.8 | 2.4 | dry filling |
| 12 | 3.8 | 2 | 1.8 | very dry filling |
| 13 | 3.8 | 2.4 | 2.4 | dry filling |
| 14 | 3,2 | 2,8 | 2,6 | slightly burnt filling |
| 15 | 2.2 | 2 | 2 | rubbery dough, dry filling |

Pizza no. 6 was judged to be the absolutely best one.

From the foregoing description emerge clearly the numerous advantages achieved by the present invention; in particular, it allows to obtain a pre-cooked heat-only pizza suitable to be eaten some time after its production and that still preserves entirely the organoleptic and nutritive qualities of a pizza just prepared and taken out of the oven.

## Claims

1. Food dough for pizza, comprising in parts by weight based on the total weight of the same:
- 45 to 70 parts by weight of baking-flour;
- 13 to 40 parts by weight of water;
- 0.05 to 0.5 parts by weight of leaven;
- 3 to 34 parts by weight of at least a gel-forming compound that can absorb and keep moisture.

2. Dough according to claim 1, characterised in that said gel-forming compound comprises at least a starch-based compound.

3. Dough according to claim 2, characterised in that said starch-based compound can be obtained from edible tubers.

4. Dough according to claim 3, characterised in that said edible tubers are chosen among the group comprising potatoes, manioc, and mixtures thereof.

5. Dough according to claim 3, characterised in that said starch-based compound comprises mashed potatoes.

6. Dough according to claim 2, characterised in that said starch-based compound comprises food fecula, preferably potato flour.

7. Dough according to claim 3, characterised in that it comprises 11 to 28 parts by weight of said starch-based compound, preferably 15 to 19 parts by weight.

8. Dough according to claim 1, characterised in that it further comprises 0.05 to 0.5 parts by weight of sodium bicarbonate.

9. Dough according to claim 1, characterised in that it further comprises 0.5 to 4 parts by weight of vegetable oil.

10. Dough according to claim 9, characterised in that it comprises 1.5 to 2.5 parts by weight of said vegetable oil.

11. Dough according to claim 9, characterised in that said vegetable oil is chosen among the group comprising: seed oil, olive oil, peanut oil, maize oil, and mixtures thereof.

12. Use of the dough according to any of claims 1 to 11, for the production of pizzas, in particular pre-cooked heat-only pizzas.

13. Pre-cooked heat-only pizza obtainable by rolling out and cooking of a food dough according to any of claims 1 to 11.

14. Process for the production of a pre-cooked heat-only pizza, comprising the steps of:
- mixing 45 to 70 parts by weight of a baking-flour with 13 to 40 parts by weight of water, 0.05 to 0.5 parts by weight of leaven, and 3 to 34 parts by weight of at least a gel-forming compound that can absorb and keep moisture, obtaining a homogeneous and partly elastic dough;
- rolling out said dough, obtaining a base for pizza;
- cooking completely the so obtained base;
- arranging a filling on the cooked base;
- packing the cooked and filled base, obtaining a pre-cooked heat-only pizza.

15. Process according to claim 14, characterised in that it further comprises the step of cooling at room temperature the completely cooked base for pizza before its filling.

16. Process according to claim 14, characterised in that it further comprises the step of arranging a given quantity of tomato sauce on the base for pizza before its cooking.

17. Process according to claim 14, characterised in that said gel-forming compound comprises at least a starch-based compound, preferably obtainable form edible tubers chosen among the group comprising potatoes, manioc, and mixtures thereof.

18. Process according to claim 17, characterised in that said starch-based compound comprises mashed potatoes.

19. Process according to claim 17, characterised in that said starch-based compound comprises food fecula, preferably potato flour.

20. Process according to claim 14, characterised by the fact of mixing, together with the baking-flour, the water, the leaven and the gel-forming compound, also 0.05 to 0.5 parts by weight of sodium bicarbonate and/or 0.5 to 4 parts by weight of a vegetable oil.

21. Use of at least a gel-forming compound able to absorb and keep the moisture in a food dough for pizza, that allows a heating of the pizza dough once it is completely cooked, without the happening of unwanted phenomena of hardening of the same.

22. Use according to claim 21, characterised in that said gel-forming compound comprises a starch-based compound, preferably obtainable from edible tubers chosen among the group comprising potatoes, manioc, and mixtures thereof.

23. Use according to claim 22, characterised in that said starch-based compound comprised mashed potatoes.

24. Use according to claim 22, characterised in that it comprises 11 to 28 parts by weight of said starch-based compound, preferably 15 to 19 parts by weight, based on the total weight of said dough.
